# EUROPEAN PATENT APPLICATION

(11) **EP 3 299 931 A1**
(43) Date of publication of application: **28.03.2018**
(21) Application number: 16306237.5
(22) Date of filing: 27.09.2016
(51) Int. Cl.: G06F 3/01, G06K 9/00

(54) **ALTERED-REALITY CONTROL METHOD AND ALTERED-REALITY CONTROL SYSTEM**

(71) Applicant: ALCATEL LUCENT, 92100 Boulogne-Billancourt (FR)
(72) Inventor: Tytgat, Donny, 2018 Antwerpen (BE); Lievens, Sammy, 2018 Antwerpen (BE)
(74) Representative: D'Halleweyn, Nele Veerle Trees Gertrudis

(57) **Abstract**

An altered-reality control method for controlling an altered-reality application, the altered-reality control method comprising the steps of: obtaining user sensor data pertaining to a scene of an environment wherein a user of the altered-reality application is located, the scene corresponding to a user-perceived part of the environment; determining a scene state based on the obtained user sensor data, the scene state comprising at least one of a location and an orientation of at least one predefined control object located within the scene; determining a target application state based on the determined scene state; comparing the determined target application state with a current application state; and determining at least one control command to transform the current application state into the determined target application state if said determined target application state is different from the current application state.

## Description

### Field of Invention

The field of the invention relates to altered-reality applications. Particular embodiments relate to an altered-reality control method and altered reality control system for controlling an altered-reality application.

### Background

In altered-reality (AR) applications reality is altered by adding virtual content. As such, virtual content to be added needs to be defined along with where the virtual content is to be placed at each point in time. Typically, AR markers are used to register this content to the reality. However, additional control is still needed to define and steer what virtual content is shown, how it is displayed and how a user of an AR application can interact with the virtual content.

In existing AR applications virtual content is statically allocated to real-world tokens, markers, objects and/or locations. Interaction with the virtual content is only possible by using an "out-of-band" control system, meaning that a separate device is needed to activate or deactivate markers, change virtual content, etc. This manner of control causes an interruption of the AR experience of a user, because it requires the user to interact with another, separate system. This is undesirable for a user being immersed in an altered-reality because it breaks the "illusion".

### Summary

The object of embodiments of the invention is to provide an altered-reality control method and altered reality control system for controlling an altered-reality application without breaking the illusion of a user. More in particular, embodiments of the invention aim to provide an altered-reality control method and altered reality control system which allow for a user to remain immersed in the altered-reality while interacting with the virtual content.

According to a first aspect of the invention there is provided an altered-reality control method for controlling an altered-reality application, the altered-reality control method comprising the steps of:
- obtaining user sensor data pertaining to a scene of an environment wherein a user of the altered-reality application is located, the scene corresponding to a user-perceived part of the environment;
- determining a scene state based on the obtained user sensor data, the scene state comprising at least one of a location and an orientation of at least one predefined control object located within the scene;
- determining a target application state based on the determined scene state;
- comparing the determined target application state with a current application state; and
- determining at least one control command to transform the current application state into the determined target application state if said determined target application state is different from the current application state.

Embodiments of the invention are based *inter alia* on the insight that a location and/or orientation of a physical object in the environment of a user can be linked to a state of the altered-reality application. This allows a user of the altered-reality application to perform control actions and/or (de)activate virtual functionality within the altered-reality application by manipulating the according physical object. Moreover, this allows a user to perform control actions within the altered-reality application without the need for using a separate control device, and thus without the illusion of altered-reality being broken.
By obtaining sensor data pertaining to an environment wherein the user of the altered-reality application is located, and more in particular to a scene of the environment corresponding to a user-perceived part of the environment, allows to monitor whether a predefined physical control object is sensed by the user. For example, when the obtained user sensor data originates from a head-mounted camera of the user, it can be monitored whether a predefined control objects falls within a field of view of the user, and, if it does, where the predefined control object is located and/or what the orientation of the predefined control object is. Information on at least one of the location and orientation of the predefined is comprised in a so-called scene state. The scene state is thus representative for the setting of the real-world environment, and more in particular the real-world scene as perceived by the user. Based on the determined scene state, a target application state can be determined. In other words, based on at least on of the position and orientation of the predefined object within the scene, it is determined what the state of the altered-reality application should be. For example, a certain location within the scene may invoke altered-reality functionality when the predefined control object is positioned on that certain location. Therefore, based on the scene state, comprising the location of the predefined control object, the target application state, e.g. invoking altered-reality functionality, can be determined. The target application state is then compared with the current application state, and if the target application state is different from the current application state, a control command is determined to transform the current application state to the target application state. For example, if the location of the predefined control object is positioned on a location that should activate a certain altered-reality functionality, either nothing happens if the certain altered-reality functionality is already active, or the altered-reality functionality is activated if it is not active in the current application state.
In other words, the basic idea of the invention involves the registration of real-world objects, further referred to as control objects, which can act as placeholders on which to position virtual content and where the real-world interactions of the user with these control objects are interpreted as control signals for the altered-reality application.

According to an embodiment, the altered-reality control method further comprises
- obtaining external sensor data pertaining to at least a part of the environment wherein the user of the altered-reality application is located; and wherein
- determining the scene state comprises determining the scene state based on the external sensor data.

External sensor data which is representative for at least a part of the environment wherein the user is located, may be used to supplement the user sensor data. The user sensor data typically corresponds with information regarding a user-perceived part of the environment, whereas the external sensor data may correspond to other parts of the environment, or may provide information regarding a movement of the user in the environment. When sensor data for example originates from a visual sensor, such as a camera, user sensor data can be seen as to originate from a head-mounted camera, whereas external sensor data can be seen as to originate from for example a wall-mounted camera which monitors the environment. External sensor data may comprise data on the location and/or orientation of one or more predefined control objects and/or on the location and/or orientation of the user within the environment, which allows for a more accurate monitoring and determination of the scene state.

According to an embodiment, the altered-reality control method further comprises
- obtaining object sensor data pertaining to at least one of location and orientation of the at least one control object; and wherein
- determining the scene state comprises determining the scene state based on the object sensor data.

Object sensor data which is representative for at least one of a location and orientation of a particular predefined control object, may be used to supplement the user sensor data and/or the external sensor data. Typically object sensor data originates from an object sensor which may be attached to or embedded in the particular predefined control object. Examples of such sensors are an accelerometer, a compass etc. In other words, object sensor data may comprise data on a location and/or orientation of a particular predefined control object, which allows for a more accurate monitoring and determination of the scene state.

According to an embodiment, the steps of obtaining respective sensor data from among the user sensor data, external sensor data and object sensor data, and determining the scene state are executed iteratively, and determining the scene state comprises updating a previously determined scene state.

The skilled person understands that in the very first iteration of determining a scene state, a scene state is determined from scratch since no earlier determined scene state is available. However, in any iteration following the first iteration, the determined scene state may be updated based on newly obtained respective sensor data from among the user sensor data, external sensor data and object sensor data. In comparison to determining a scene state from scratch during each iteration, updating the determined scene state has the advantage that it requires less computational power, is faster, and that by updating the determined scene state, respective sensor data obtained on different moments in time is accumulated and aggregated which leads to a more detailed and accurate scene state.

According to an embodiment, determining the scene state comprises transforming the respective sensor data from among the user sensor data, external sensor data and object sensor data into a uniform format and combining the respective transformed sensor data.

As mentioned earlier, different types of sensor data may originate from different types of sensors, for example user sensor data may originate from a head-mounted camera, whereas external sensor data may originate from a camera which is positioned on a wall in the environment wherein the user is located, and object sensor data may originate from a gyroscope embedded in a predefined control object. By transforming each of these different types of obtained sensor data into a uniform format, allows for combining the different types of obtained sensor data in the uniform format, such that these different types of obtained sensor data are taken into account when determining a scene state. This has the advantage that the scene state can be determined more accurately. For example when the user sensor data only provides a partial view of a predefined control object, it may still be possible to determine the location and/or orientation of the predefined control object with sufficient accuracy because information contained in the external sensor data and/or object sensor data.

According to an embodiment, transforming the respective sensor data into a uniform format is based on information pertaining to at least one previously determined scene state.

In a similar manner as described in the previous embodiment, wherein obtained sensor data from one type, may be complemented by obtained sensor data from another type, the obtained sensor data may be complemented by sensor data obtained during previous iterations. A practical way of doing this is by taking into account a previously determined scene state when transforming the obtained sensor data into the uniform format. The skilled person understands that transforming the obtained sensor data typically comprises modelling the obtained data by providing parameters to the data models. By taking into account a previously determined scene state while transforming the respective obtained sensor data, the obtained sensor data may be complemented by the information provided in the previously determined scene state, such that modelling of the obtained sensor data is done more accurately and more data is accounted for in the uniform format.

According to an embodiment, determining the target application state based on the determined scene state comprises applying to the determined scene state a set of predefined interaction rules relating to the scene and the at least one control object.

For example, the rules may define certain areas or locations in the environment to be "active" locations, which may trigger an altered-reality functionality when the predefined control object is placed in one of the active areas. However, the predefined interaction rules may for example also relate to an orientation of the predefined control object, a distance between two or more control objects, a direction in which a user is looking, etc. Predefining altered-reality application specific rules allows for intuitive interactions with the altered-reality application, without having to interact with a computer interface.

The skilled person will understand that the hereinabove described technical considerations and advantages for method embodiments also apply to the below described corresponding system embodiments, *mutatis mutandis.*

According to a second aspect of the invention there is provided an altered-reality control system for controlling an altered-reality application, the altered-reality control system comprising:
- at least on user sensor obtaining unit configured for obtaining user sensor data pertaining to a scene of an environment wherein a user of the altered-reality application is located, the scene corresponding to a user-perceived part of the environment;
- a scene state determining unit configured for determining a scene state based on the obtained user sensor data, the scene state comprising at least one of a location and an orientation of at least one predefined control object located within the scene;
- a target application state determining unit configured for determining a target application state based on the determined scene state;
- a state comparing unit configured for comparing the determined target application state with a current application state; and
- a control command determining unit configured for determining at least one control command to transform the current application state into the determined target application state if said determined target application state is different from the current application state.

According to an embodiment, the altered-reality control system further comprises:
- at least one external sensor data obtaining unit configured for obtaining external sensor data pertaining to at least a part of the environment wherein the user of the altered-reality application is located; and wherein
- the scene state determining unit is further configured for determining the scene state based on the external sensor data.

According to an embodiment, the altered-reality control system further comprises:
- at least one object sensor configured for obtaining object sensor data pertaining to at least one of location and orientation of the at least one control object; and wherein
- the scene state determining unit is further configured for determining the scene state based on the object sensor data.

According to an embodiment, the altered-reality control system further comprises:
- an iteration unit configured to cooperate with the respective at least one sensor from among the at least one user sensor data obtaining unit, at least one external sensor data obtaining unit and at least one object sensor data obtaining unit and the scene state determining unit such that the steps of obtaining the respective sensor data from among the user sensor data, external sensor data and object sensor data, and determining the scene state, respectively, are executed iteratively; and wherein
- the scene state determining unit is configured for updating a previously determined scene state.

According to an embodiment, the scene state determining unit is further configured for transforming the respective sensor data from among the user sensor data, external sensor data and object sensor data into a uniform format and for combining the respective transformed sensor data.

According to an embodiment, the scene state determining unit is configured for transforming the respective sensor data from among the user sensor data, external sensor data and object sensor data into a uniform format based on information pertaining to at least one previously determined scene state.

According to an embodiment, the target application state determining unit is further configured for applying to the determined scene state a set of predefined interaction rules relating to the scene and the at least one control object.

According to an embodiment, the altered-reality control system is comprised in a head-mounted device which is configured to be carried by the user and which is configured to run the altered-reality application.

According to a further aspect of the invention, there is provided a device, comprising the altered-reality control system according any one of the above described embodiment. The device may preferably be a head-mounted device

According to a further aspect of the invention, there is provided a device comprising a housing and electric circuitry, the device being configured for performing the steps of any of the above described method embodiments. The device may preferably be a head-mounted device.

According to a further aspect of the invention, there is provided a computer program product comprising computer-executable instructions for performing the method of any one of above described embodiment, when the program is run on a computer.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically an exemplary embodiment of an altered-reality control method according to the invention;
Figure 2 illustrates schematically a further exemplary embodiment of an altered-reality control method according to the invention;
Figure 3 illustrates schematically a further exemplary embodiment of an altered-reality control method according to the invention;
Figure 4 illustrates schematically a further exemplary embodiment of an altered-reality control method according to the invention;
Figure 5 illustrates schematically a further exemplary embodiment of an altered-reality control method according to the invention;
Figure 6 illustrates schematically an exemplary embodiment of an altered-reality control system according to the invention;
Figure 7 illustrates schematically a further exemplary embodiment of an altered-reality control system according to the invention;
Figure 8A illustrates a set-up environment for an altered-reality application wherein a user of an altered-reality application and a predefined control object are located in the environment;
Figure 8B illustrates schematically an exemplary embodiment of the altered-reality control system according to the invention, which can be implemented for any altered-reality application in the environment as illustrated in figure 8A;
Figure 9 illustrates an exemplary embodiment of an altered-reality control method, implemented in an exemplary altered-reality application regarding video conferencing;
Figure 10 illustrates a further exemplary embodiment of an altered-reality control method, implemented in a further exemplary altered-reality application regarding video conferencing; and
Figure 11 illustrates an exemplary embodiment of an altered-reality control method, implemented in an altered-reality application regarding collaborative design.

### Description of embodiments

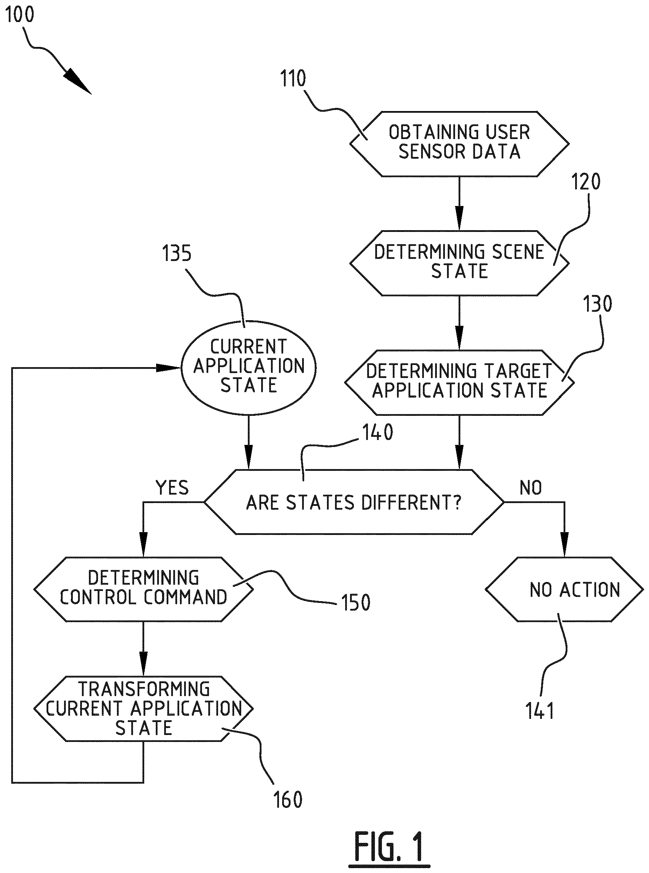

Figure 1 illustrates an altered-reality control method 100 for controlling an altered-reality application by means of physical objects that are present in the real-word environment of a user of the altered-reality application. The altered-reality control method 100 comprises a step 110 of obtaining user sensor data pertaining to a scene of the environment wherein the user of the altered-reality application is located, the scene corresponding to a user-perceived part of the environment. Such user sensor data may for example originate from a camera on a head-mounted device worn by the user. This way, the camera images are representative for which part of the environment is visible to the user, and thus the camera images represent the scene. Alternatively to user sensor data originating from a head-mounted camera, other types of user sensor data can be used. For example, information on the scene as perceived by the user may also be provided by a GPS location chip carried by the user, and a user-mounted accelerometer or compass to provide information on the orientation of the user. By using the GPS location chip and the user-mounted accelerometer, the position of the user within the environment can be determined along with the orientation of the user, or the direction the user is facing. In this manner, the user sensor data pertains to the scene of the environment, the scene corresponding to the user-perceived part of the environment. Moreover, according to an embodiment the user sensor data may comprise a combination of data obtained from a camera, from a GPS location chip and/or from an accelerometer. The altered-reality control method 100 further comprises a step 120 of determining a scene state based on the obtained user sensor data, the scene state comprising at least one of a location and an orientation of at least one predefined control object located within the scene. The predefined control object or objects typically are real-word objects, which are known and can be recognized by the altered-reality application. The control objects are predefined, which means that certain altered-reality functionality is attributed to a corresponding state of the control object in the real world. Such corresponding state of the control object may relate to a position or location of the control object within the environment, an orientation of the control object within the environment, whether the user is looking at the control object or not, or any combination of these features. This state of the control object(s) in relation to the scene, is referred to as the scene state. The altered-reality control method further comprises a step 130 of determining a target application state based on the determined scene state. When the scene state is determined, it can be determined whether altered-reality functionality should be activated or not. In other words, based on the scene state, and thus based on the state of the control objects within the scene or environment, it is determined what the target application state is, or what the user wanted to accomplish in the altered-reality application by manipulating and/or repositioning one or more control objects. Once the target application state is determined, this determined target application state is compared with the state which the application is currently in. This is done in step 140 of comparing the determined target application state with a current application state 135. After comparing in step 140, the method comprises step 150 of determining at least one control command, which is used for step 160 of transforming the current application state 135 into the determined target application state if said determined target application state is different from the current application state 135. No control commands need to be determined when the current application state corresponds with the target application state, as indicated by the "no action"-step 141 in Figure 1.

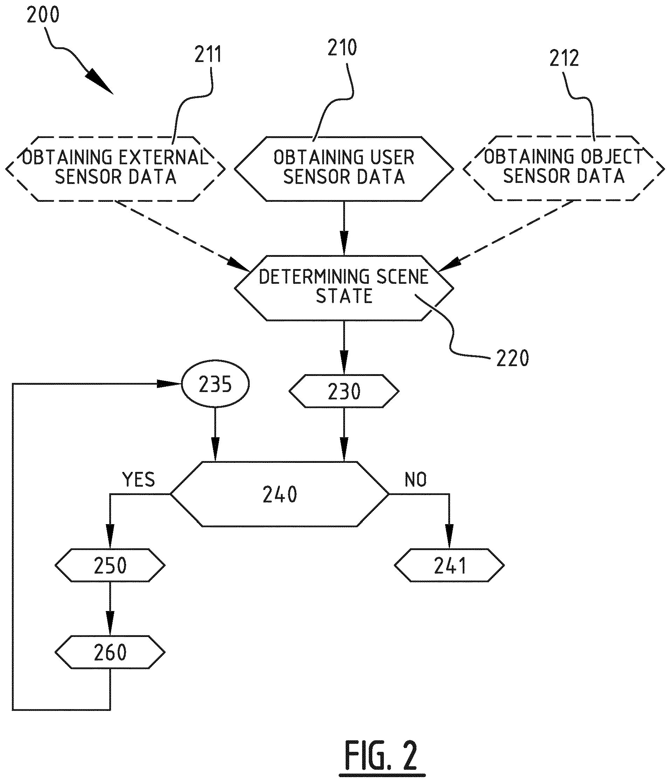

Figure 2 illustrates three further embodiments of the altered-reality control method 100, 200 of figure 1, more in particular, figure 2 illustrates exemplary embodiments wherein the control method 100, 200 further comprises:
- step 211 of obtaining external sensor data pertaining to at least a part of the environment wherein the user of the altered-reality application is located, and wherein step 220 comprises determining the scene state based on the external sensor data; and/or
- step 212 of obtaining object sensor data pertaining to at least one of location and orientation of the at least one control object, and wherein step 220 comprises determining the scene state based on the object sensor data.

This is illustrated in figure 2 by providing the steps 211 and 212 in dashed lines, indicating that either one of the steps 211 and 212 may be added to the altered-reality control method, or either both steps 211 and 212 may be added to the altered-reality control method 200. Illustrated steps 230, 240, 241, 250, 260 and element 235 are similar to the steps 130, 140, 141, 150, 160 and element 135 as described in relation to figure 1 and are, for the sake of brevity, not further elaborated on here.
External sensor data originates from sources or sensors which are not user-mounted in any way. For example external sensor data can originate from one or more wall-mounted cameras or sensors in the environment wherein the user is located. The external sensor data may be indicative for the state of one or more control objects within the scene or the environment. Since the external sensor data originates from somewhere external as compared to the user, information on control objects which are not directly perceived by the user may be obtained.
Object sensor data originates from sources attached to or embedded in the control objects within the environment. Such sources may include a compass, accelerometer, gyroscope, or the like. Since the object sensor data originates from sources attached to or embedded in the control object or control objects, information on control objects which are not directly perceived by the user may be obtained.

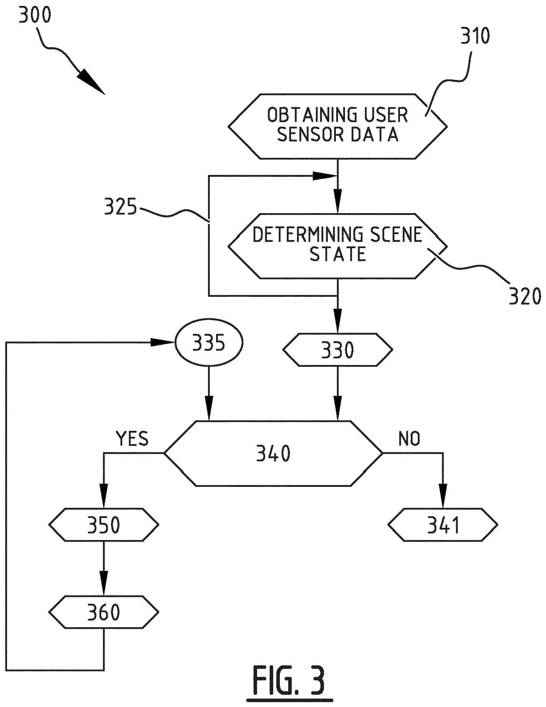

Figure 3 illustrates schematically an exemplary embodiment of an altered-reality control method 300, wherein the step 310 of obtaining user sensor data, and 320 of determining the scene state are executed iteratively, and wherein determining the scene state comprises a step 325 of updating a previously determined scene state. Although this is not shown in figure 3, the skilled person understands that the illustrated method may include, as shown in figure 2, the steps of obtaining external sensor data and/or obtaining object sensor data.
Illustrated steps 330, 340, 341, 350, 360 and element 235 are similar to the steps 130, 140, 141, 150, 160 and element 135 as described in relation to figure 1 and are, for the sake of brevity, not further elaborated here.
The skilled person understands that in the very first iteration of determining a scene state, a scene state is determined from scratch since no earlier determined scene state is available. However, in any iteration following the first iteration, the determined scene state may be updated based on newly obtained user sensor data, or on obtained external sensor data and/or obtained object sensor data if the steps of obtaining external sensor data and/or obtaining object sensor data are included in the altered-reality application method.

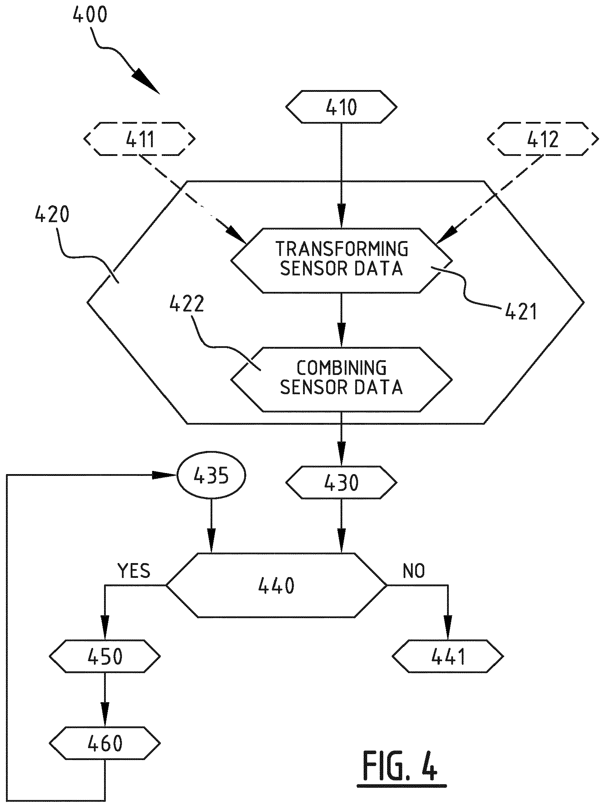

Figure 4 illustrates schematically a preferred embodiment of an altered-reality control method 400, wherein the step 420 of determining the scene state comprises a step 421 of transforming the respective sensor data from among the user sensor data, external sensor data and object sensor data into a uniform format and a step 422 of combining the respective transformed sensor data. The term "respective sensor data" is used in this application to refer to one of:
- the obtained user sensor data; or
- the obtained user sensor data and the obtained external sensor data; or
- the obtained user sensor data and the obtained object sensor data; or
- the obtained user sensor data and the obtained external data and the obtained object sensor data.
It is clear to the skilled person that which of the above options is meant depends on the described embodiment providing the context of the term "respective sensor data".
Illustrated steps 410, 411, 412, 430, 440, 441, 450, 460 and element 435 are similar to the corresponding steps as described in relation to the previous figures and are, for the sake of brevity, not further elaborated here.

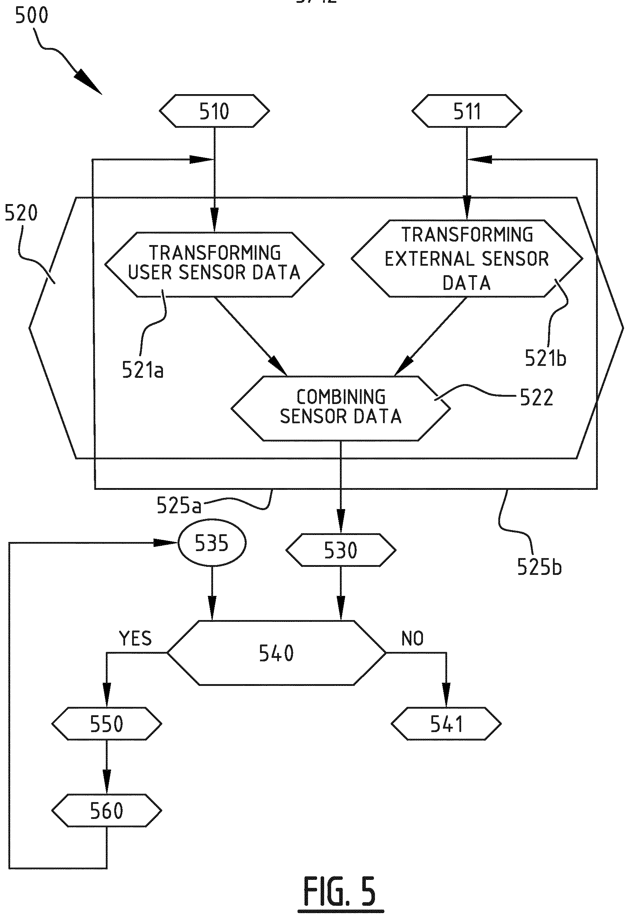

Figure 5 illustrates schematically a further exemplary embodiment of an altered-reality control method 500 comprising steps 521a and 521b of transforming the respective sensor data into a uniform format, wherein steps 521a and 521b are based on information pertaining to at least one previously determined scene state. Figure 5 illustrates the steps 510 of obtaining user sensor data and 511 of obtaining external sensor data. In the exemplary embodiment of figure 5, the step 521 of transforming respective obtained sensor data, has been split up into two separate steps, more in particular a step 521 of transforming the user sensor data and a step 521b of transforming the external sensor data. When both the obtained user sensor data and external sensor data have been transformed into a uniform format, the transformed user sensor data and transformed external data can be combined with each other to determine a scene state in a uniform, preferable normalized format. Figure 5 further illustrates the steps 525a and 525b of "feeding back" the determined scene state to the steps 521a and 521b, respectively, such that the previously determined scene state can be used to complement the obtained user sensor data and the obtained external sensor data. In an exemplary embodiment, the transforming in steps 521a and 521b involves some processing to improve the raw sensor data coming from blocks 510 and 511 respectively. To improve the raw sensor data, both steps 521a and 521b may include transforming and/or adapting the sensor data to the additional information that is contained in the previously determined scene state, which is provided to the steps 521a and 521b through feedback loops 525a and 525b. Although both steps 521a and 521b are illustrated as being separate steps, after which steps the respective transformed sensor data is combined, it is clear to the skilled person that steps 521a and 521b may also be comprised in one step, along with the step 522 of combining the transformed sensor data. A same reasoning applies for the steps 525a and 525b.
It is clear to the skilled person that the described altered-reality control method relating to Figure 5 would be equally applicable if the control method would comprise a step of obtaining object sensor data, either instead of step 511 or either in addition to steps 510 and 511.

According to a further aspect of the invention, a device may be provided comprising a housing and electric circuitry, wherein the device is configured for performing the steps of any of the above described method embodiments in connection to figures 1 to 5. The device may preferably be a head-mounted device.

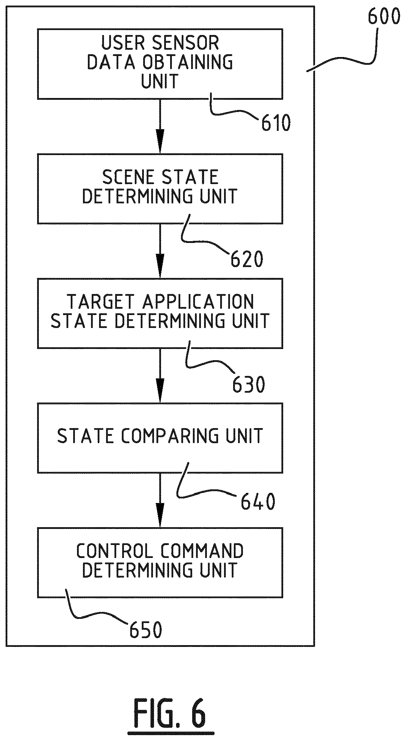

Figure 6 illustrates schematically an altered-reality control system 600 for controlling an altered-reality application, the altered-reality control system 600 comprises at least on user sensor data obtaining unit 610 configured for obtaining user sensor data pertaining to a scene of an environment wherein a user of the altered-reality application is located, the scene corresponding to a user-perceived part of the environment. Typically, the user sensor data obtaining unit is configured for obtaining user sensor data from a user sensor. The user sensor can for example be a head-mounted camera or a tracker attached to the user. User sensor data may be obtained either via a wired connection between the user sensor and the user sensor data obtaining unit, or either wirelessly. It is clear to the skilled person that in order for the control system to connect to a number of user sensors, multiple user sensor data obtaining units 610 may be provided or alternatively the user sensor data obtaining unit 610 may be configured for obtaining user sensor data from multiple user sensors. The control system 600 further comprises a scene state determining unit 620 configured for determining a scene state based on the obtained user sensor data, the scene state comprising at least one of a location and an orientation of at least one predefined control object located within the scene. The predefined control object or objects typically are real-word, physical objects, which are known to the control system and which can be recognized by the control system and/or the altered-reality application. The control objects are predefined, which means that certain altered-reality functionality is attributed to a corresponding state of the control object in the real world. Such corresponding state of the control object may relate to a position or location of the control object within the environment, an orientation of the control object within the environment, whether the user is looking at the control object or not, or any combination of these features. This state of the control object(s) in relation to the scene, is referred to as the scene state. Figure 6 further illustrates a target application state determining unit 630 configured for determining a target application state based on the determined scene state, a state comparing unit 640 configured for comparing the determined target application state with a current application state and a control command determining unit 650 configured for determining at least one control command to transform the current application state into the determined target application state if said determined target application state is different from the current application state. When the scene state determining unit 620 has determined the scene state, the target application state determining unit 630 is configured to determine whether altered-reality functionality should be activated or not. In other words, the target state determining unit 620 is configured to, based on the scene state, and thus based on the state of the control objects within the scene or environment, determine the target application state, or what the user wanted to accomplish in the altered-reality application by manipulating and/or repositioning one or more control objects. Once the target application state is determined, the state comparing unit 640 is configured to compare this determined target state with the state which the application is currently in. Consequently, the control command determining unit 650 is configured for determining at least one control command, for transforming the current application state into the determined target application state if said determined target application state is different from the current application state. When the target application state corresponds with the current application state, no action is taken or a "null" control command is determined.

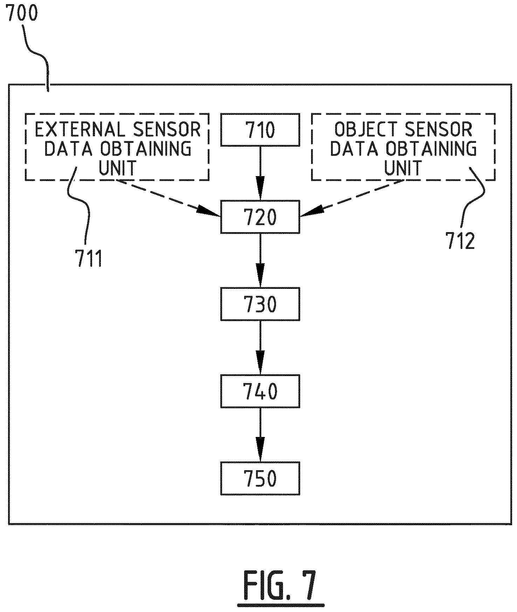

Figure 7 illustrates three further embodiments of the altered-reality control system 600, 700 of Figure 6, more in particular, Figure 7 illustrates exemplary embodiments wherein the control system 600, 700 further comprises:
- an external sensor data obtaining unit 711 configured for obtaining external sensor data pertaining to at least a part of the environment wherein the user of the altered-reality application is located, the state determining unit 720 being further configured for determining the scene state based on the external sensor data; and/or
- an object sensor data obtaining unit 712 configured for obtaining object sensor data pertaining to at least one of location and orientation of the at least one control object, the state determining unit 720 being configured for determining the scene state based on the object sensor data.
This is illustrated in Figure 7 by providing the sensors 711 and 712 in dashed lines, indicating that either one of the sensors 711 and 712 may be added to the altered-reality control system 700, or either both sensors 711 and 712 may be added to the altered-reality control system 700. Illustrated elements 710, 720, 730, 740 and 750 provide similar functionality as compared to the elements 610, 620, 630, 640 and 650 as described in relation to figure 6 and are, for the sake of brevity, not further elaborated on here.

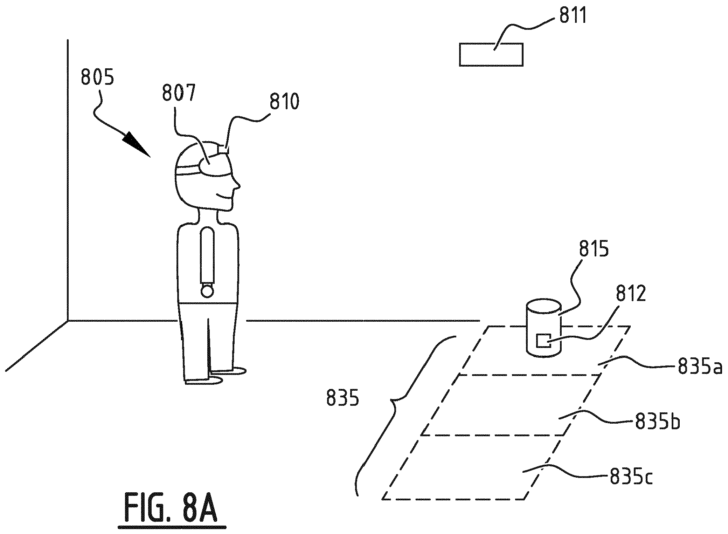

Figure 8A illustrates a user 805 of an altered-reality application in a real-world environment. In the real-word environment a predefined control object 815 in the form of cylinder is located in one of three predefined sub-areas 835a, 835b and 835c of predefined area 835. It is clear to the skilled person that although in this exemplary embodiment a cylindrical control object 815 is used, the control object or control objects can be any physical object in the real world which is known to the control method or control system, or in other words is predefined. This allows for the control method or control system to recognize the control object and the corresponding states of the control object. Moreover, it is clear to the skilled person that although the predefined sub-areas 835a, 835b, 835c of a predefined area 835 are illustrated in the embodiment of figure 8A, other types or forms of predefined areas can be used according to the same principle. Depending on the specifications of the altered-reality application, only the location of a control object may be relevant for controlling the application, or only the orientation of a control object may be relevant for controlling the application, or a combination of both the location and orientation may be relevant for controlling the application. In the illustrated embodiment, the predefined control object 815 is provided with an object sensor 812. The object sensor may for example be an accelerometer, gyroscope, location chip etc. The user 805 is wearing a head-mounted device with a display 807, through which the user can be immersed into the altered-reality of the altered-reality application, and a camera which provides visual information to user sensor obtaining unit 810. Object sensor data originating from the object sensor 812 can be obtained by an object sensor data obtaining unit (not shown in figure 8A), which is provided in the head-mounted device. Object sensor data can be obtained wirelessly, for example via Wi-Fi and/or Bluetooth. In the illustrated embodiment, there is further provided a wall-mounted camera 811 in the environment, which provides information to the external sensor data obtaining unit (not shown in figure 8A), which can be comprised in the head-mounted device. External sensor data can be obtained wirelessly, for example via Wi-Fi and/or Bluetooth.

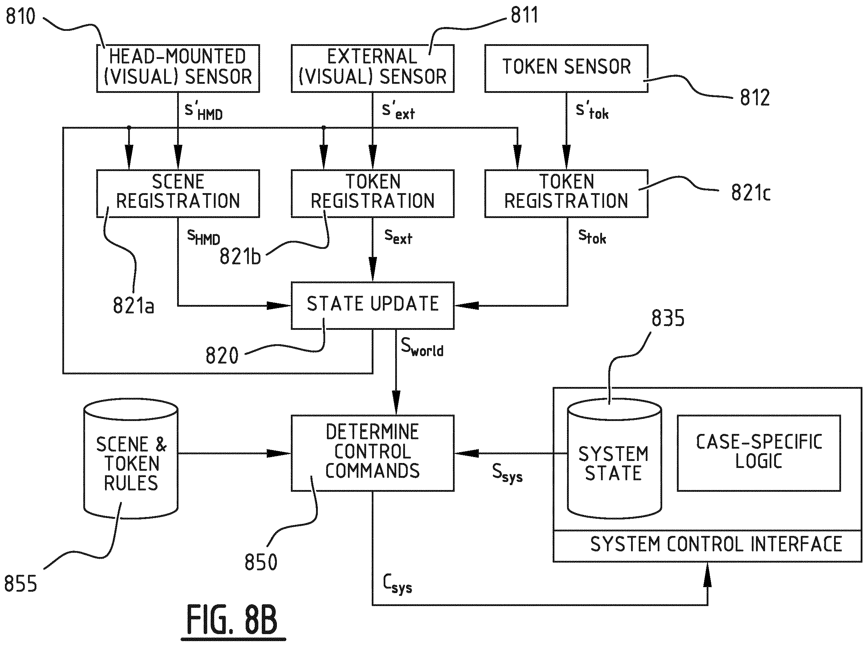

Figure 8B illustrates schematically an exemplary embodiment of the altered-reality control system 800 according to the invention in view of the situation that is outlined in figure 8A. First blocks 810, 811 and 812 involve the generation of reliable measurements about the real-world environment wherein the user 805 is located. More specifically, it is desired to monitor where the user is looking at, where the predefined control objects, also called tokens, are in the user-perceived scene of the environment and what the state of these tokens is. This monitoring can be done by one or more sensors 810, 811 and 812. Although one sensor 810 can provide all information needed, adding one or more additional sensors 811 and 812 may result into more detailed or more accurate measurements about the real-word environment and/or the tokens situated therein. In the course of this application, the wordings "token" and "control object" may be interchangeably used. Data originating from illustrated sensors 810, 811 and 812 in figure 8B is obtained by the system by means of corresponding sensor data obtaining units, which are not shown in figure 8B. Although the sensors 810, 811, 812 may be comprised in the control system, it is clear to the skilled person that this is not required. The control system may be (wirelessly) connected to any one of the sensors 810, 811 and 812, as long as data originating from these sensors can be obtained by the control system. This is done by means of the corresponding sensor data obtaining units. This allows for the entire control system to be present in one device, for example a head-mounted device. In Figure 8B, the obtained raw sensor data is denoted as s'. This raw sensor data corresponds with the sensor data as obtained by any one of the sensor data obtaining units.

In the embodiment described in figure 8B, the first sensor 810 is one that is mounted on a head-mounted device (HMD) 807 and comprises a camera 810, preferably a stereo camera, which is located near the eyes of the user 805. The images taken from this camera 810 are typically modified, by overlaying virtual content, and relayed to a display of the HMD in order to show the altered-reality environment or augmented space to the user.
The camera 810 is recording the scene as seen from the HMD, which is representative for a user-perceived scene of the environment. The camera 810 can be used to derive the position of the HMD, and thus the position of the user 805 wearing the HMD, with respect to the scene or environment. The obtained user sensor data from the camera 810 provides information on where the user is looking at, by recognizing a predefined AR token, such as a pattern or object within the scene. In the described embodiment of Figure 8, these AR tokens, also called control objects, are real-world, physical 3D objects of which the appearance is known to the altered-reality control system 800 and which are thus predefined. The tokens or control objects can thus be recognized, as well as their location and/or orientation, e.g. standing up or laying down.
Additional user sensors, for example non-visual sensors such as a built-in head tracker can be used to improve the information estimate. All user sensor data or head-mounted sensor information s'_{HMD} originates from the "Head mounted (visual) sensor" block 820, and its data is obtained by user sensor data obtaining unit (not shown) and the obtained information is processed by the "Scene - Token registration" block 821a.

A second type of sensor data that can be used to complement the user sensor data is the external sensor data obtained from an external sensor. The external sensor is neither head-mounted nor token-mounted. An external sensor could be an extra camera 811 that is mounted on the wall, or on a rail in the environment. The external sensor may be a still camera or a movable or moving camera. The external sensor can provide information about the tokens, and their state (location, orientation...). The additional external sensor data is obtained by the external sensor data obtaining unit (not shown) and is denoted as s'ₑₓₜ.

A third type of sensor data that can be used to complement the user sensor data is the so-called token sensor data or object sensor data obtained from a token sensor or object sensor 812, which is located on or embedded in the tokens/control objects. Such an object sensor could for example be an accelerometer, a compass, etc. The additional object sensor data is obtained by the object sensor data obtaining unit (not shown) and is denoted as s'ₜₒₖ.

The processing blocks 821a, 821b and 821c transform the raw sensor information into a uniform format that is normalized for the system and can take into account a feedback loop 825 that provides information about the current or previous determined scene states. This feedback loop 825 can be used when additional modeling is needed to transform the raw sensor information to the uniform format, and that parameters need to be provided to these models. The parameters of these models can then be tuned according to the consensus of all sensors 810, 811, 812 or their corresponding sensor data obtaining units. The normalized and/or processed information is denoted as *S_{hmd}, Sₑₓₜ and Sₜₒₖ·*

The "state update" block 820 corresponds with the scene state determining unit 620, 720 and takes all normalized information sources and creates a measurement consensus with regards to where the user 805 is looking at, the tokens 815 which are visible and their location/orientation state. The use of reliability values which are associated with the input information is known to the skilled person and this can be taken into account for create the consensus and thereby determining the scene state. This can for example be done via a probabilistic Bayesian framework.

The normalized and aggregated sensor data are used to update the scene state. Note that the scene state is not necessarily completely represented in the sensor data or measurements. A token or control object might be hidden from the sensors at a certain point in time, while the token or control object may have been seen or detected before and is therefore, by means of the feedback loop 825 included in the scene state. One way of implementing this is by creating a Markov model of this scene state and use the measurements to update it. The skilled person is aware of the use of Markov models in view of the described application. The determined scene state *S_{world}*, wherein the capital *S* denotes the full scene state rather than the partial states "*s*", can then be extracted from the Markov model and inputted into the "determine control commands" block 850, and, as mentioned before, to the individual sensor blocks 810, 811, 812 as a feedback loop.

Once the scene state is determined, application specific functions denoted as the case-specific system in figure 8B, which can for example relate to a video conferencing system in AR. Predetermined rules 855 about the scene and the tokens are used to determine the target application state. Rule-based systems are convenient to this purpose due to the easy implementation of the case-specific system logic. Although the predetermined scene and token rules 855 are illustrated as being separated from, and independent to the case-specific or application-specific logic, it is clear to the skilled person that these predetermined rules and the application-specific rules may overlap, and may be stored in one and the same unit. The system state block 835 corresponds to a current application state. The current application state 835 is inputted in block 850 to determine whether control commands are to be executed, based on comparing the current application state S_{sys} with the determined target application state. The determined target application state is determined based on the determined scene state S_{world}.

From the target system state, determined by the rules along with the scene/token state, and the current system state S_{sys} control commands C_{sys} can be determined which are needed in order to achieve this target state. These control commands are then sent to the case-specific system via for example a system control interface. Based on the control commands C_{sys} the current system state, or current application state can be updated using application-specific or case-specific logic. The next figures will illustrate this further.

According to an embodiment of the invention, the altered-reality control system is comprised in a head-mounted device which is configured to be carried by the user and which is configured to run the altered-reality application. In exemplary embodiments a user sensor, such as a camera may be attached to or incorporated into the head-mounted device. In additional embodiments, where at least one external sensor and/or at least one object sensor is used, the corresponding external sensor data and/or object sensor data may be obtained wirelessly by the external sensor data obtaining unit and/or the object sensor data obtaining unit which are comprised in the head-mounted device. In such a case, the external sensor data obtaining unit may be configured to obtain the external sensor data via Wi-Fi and/or Bluetooth or any other applicable wireless data transfer protocol. Likewise, in such a case, the object sensor data obtaining unit may be configured to obtain the object sensor data via Wi-Fi and/or Bluetooth or any other applicable wireless data transfer protocol.

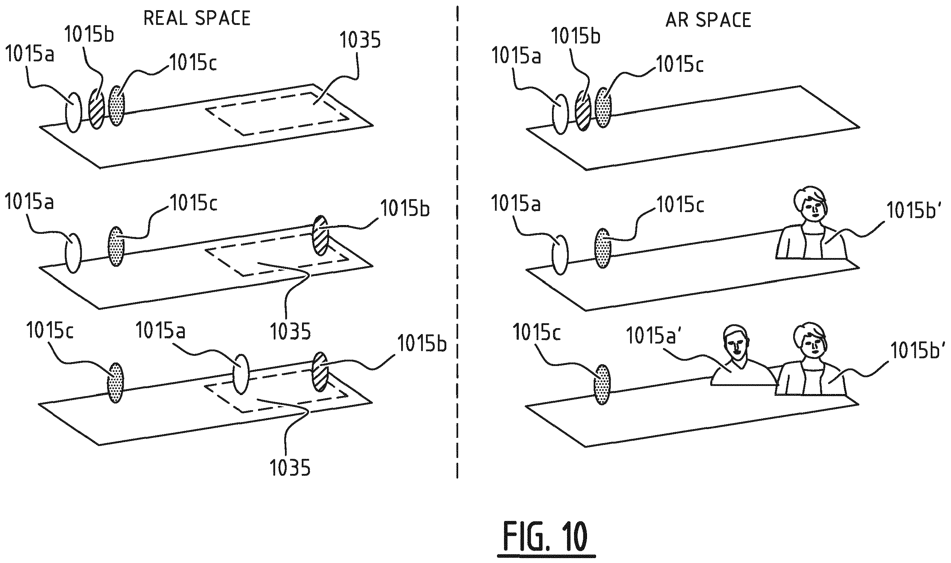

Figure 10 illustrates an exemplary embodiment of an altered-reality control method, implemented in an exemplary altered-reality application regarding video conferencing. On the left-hand side of figure 10 the real-world space is illustrated, whereas on the right-hand side of figure 10 the altered-reality space is illustrated. In the real-world space control objects 1015a, 1015b and 1015c are shown to be located on a surface. The surface can for example be a table, a floor or any other surface within the scene as viewed by perceived by the user of the altered-reality application. On the surface a predefined space 1035 is marked. The definition or delineation of the predefined spaces 1035 and any functionality of the spaces 1035 in relation to the control objects 1015a, 1015b and 1015c correspond with predefined interaction rules relating to the scene and the control objects 1015a, 1015b and 1015c. Depending on the type of altered-reality application, different kinds of functionality and/or interaction rules may be defined in relation with the scene and the control objects 1015a, 1015b and 1015c. Rules and functionality may be either defined regarding the scene, regarding the control objects, or regarding an interaction between the scene and the control objects. In the illustrated embodiment, a certain location on the surface 1035 is allocated for video conversations via an AR device. A number of physical control objects 1015a, 1015b and 1015c are available and are visually distinct. Each control object 1015a, 1015b, 1015c is allocated to a predefined person. When no control objects 1015a, 1015b, 1015c are at the pre-defined video conversations spaces 1035, nothing happens in the altered-reality space. In the illustrated embodiment, the control objects 1015a, 1015b, 1015c are shown in the AR space, as long as they are not located on the predefined space 1035 in real space. However, when the user takes one of the control objects 1015a, 1015b, 1015c, and he or she positions the control object 1015b into that predefined space 1035, a video conference is automatically started between him or her and the person 1015b' that is linked to that control object 1015b. As such, that person 1015b' will get an invite that a conversation request is pending, and can choose to accept it. If the person in question is also using an altered-reality application, the video conference can be initialized in a similar manner as described above, or alternatively, the video conference can be initialized via a personal computer, laptop, tablet or smartphone or any other means used by the person in question. When the user takes a second control object 1015a and positions it in the predefined space 1035, the person 1015a' linked to the physical control object 1015a will be added to the conversation of the video conference. The user can re-locate the control objects 1015a, 1015b, 1015c in order to change his or her conversation partners and to get the best experience according to his or her wishes. In the illustrated embodiment, it is assumed that the video conference is done among "known" people to whom a control object has been allocated. It is however clear to the skilled person, that such a system can be extended to allow for external parties to attend by for example allocating these to a separate portion or space of the surface (e.g. at the back of the predefined space), or by using "neutral" control objects that are dynamically allocated to people. Productivity tokens or productivity control objects can also be added such that for example slides can be added to the video conference and can be located according to the wishes of the user.

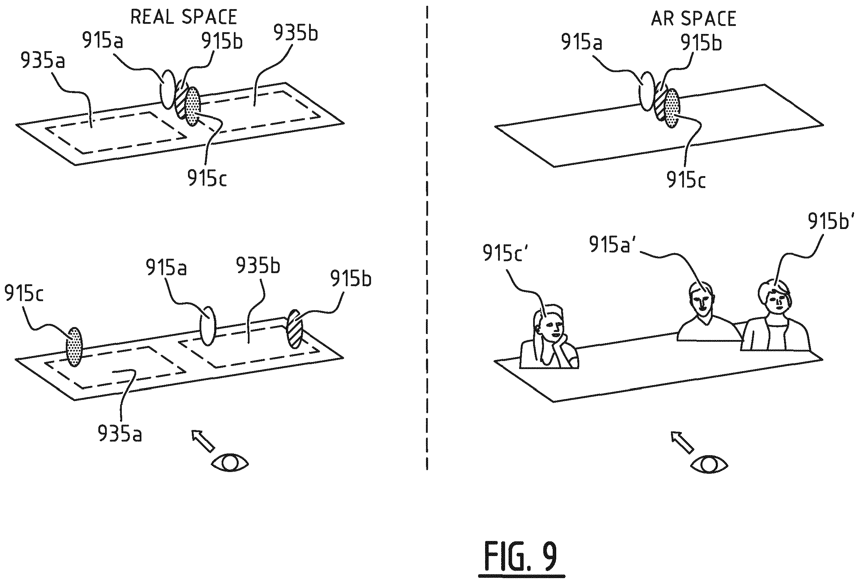

Figure 9 illustrates a further exemplary embodiment of an altered-reality control method, implemented in a further exemplary altered-reality application regarding video conferencing. More in particular, figure 9 illustrates an embodiment according to the invention, wherein multiple conversation groups are supported by providing two predefined, separate spaces 935a, 935b on the surface. Similar to the illustrated embodiment of figure 10, control objects 915a, 915b, 915c are shown to be located on the surface both in the real-world space as in the AR space when the control objects 915a, 915b, 915c are not located in any one of the predefined spaces 935a, 935b. In figure 9, predefined space 935a corresponds to a space for video conferencing or interacting with people from a personal or private contact list, whereas predefined space 935b corresponds to a space for video conferencing or interacting with people from a professional contact list. As such, there is illustrated a conversation group that is targeted towards professional interactions and another conversation group that is targeted towards personal or private interactions. In an embodiment, both conversation groups could even be used at the same time, provided that the interaction dynamics of at least one of the groups is of a more passive nature. For example, professional colleagues of the user may be experienced as being "in the neighbourhood" while the user is working from home, which would correspond with a passive interaction for most of the time. However, it would allow for a user to occasionally talk to one or more professional colleagues. As shown in figure 9, two spatial areas 935a and 935b are allocated to the different conversation groups. Pre-allocated or predefined control objects 915a, 915b, 915c are illustrated, but for the skilled person it is clear that, as mentioned in the description of figure 10, that also neutral control objects may be used, or that an overflow space may be provided for additional conversation guests. When the user moves a control object 915a, 915b, 915c into the relevant area 935a, 935b conversations are automatically initialized. As an additional parameter or rule, it can be taken into account in which direction the user is looking, for example in order to determine whether he or she should be muted in the other conversations. The pictogram of an eye accompanied by an arrow denotes the direction wherein the user is looking. Since the user is looking towards control object 915c which is located in predefined space 935a, the user has expressed his or her wish to actively communicate with person 915c'. In the AR space, this is illustrated by fading out the persons 915a'and 915b'which the user is not looking at. However, it is clear to the skilled person that alternative ways can be thought of to indicate persons being muted or deactivated. Note that, while such muting functionality is illustrated as a direct mechanism, alternatively the transition of the muted states can be "smoothened" in order to minimize the number of unwanted false mutes or unmutes.

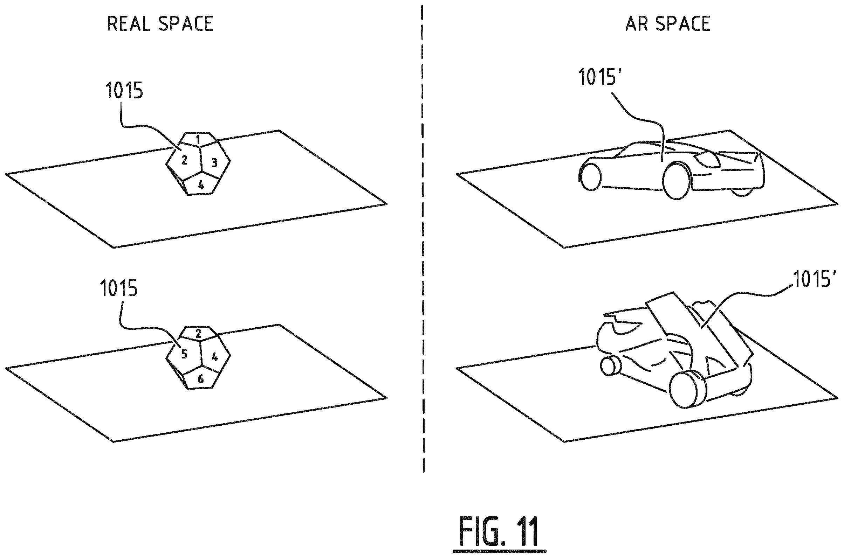

Figure 11 illustrates an exemplary embodiment of an altered-reality control method, implemented in an altered-reality application regarding collaborative design. In collaborative design, multiple people can work together on a project through a virtual or augmented representation. Figure 11 for example, illustrates an altered-reality application relating to designing a car 1015'. The altered-reality application provides the functionality to a user to walk around this virtual object of a car 1015' and to get a sense of what the car looks like, without the need of constructing a prototype. In addition to providing this functionality of walking around the car 1015', functionality is provided for changing the state of the car 1015'. In other words, the application also allows for a user to perform control actions such as open the doors of the car, or open the hood, open the trunk, change the colour of the car, etc. According to the illustrated embodiment, this control functionality is provided by means of a predefined control object, more in particular by means of a multi-faceted control object 1015.
Embodiments of the invention allow for different "real-world" states of the physical control object 1015 to be associated with the state of the virtual object 1015'. This functionality is illustrated in figure 11 where a multi-faceted control object 1015 is used to represent the virtual object 1015', such as, in the illustrated embodiment, a car 1015' in the AR space. Each facet of the predefined control object 1015 can be predefined to correspond with a state of the car 1015'. In the illustrated embodiment facet 1 of the control object 1015 corresponds with the state of the car 1015' where all doors are closed, and facet 2 of the control object 1015 corresponds with the state of the car 1015' where the doors are opened. The user can switch between the first state and the second state by simply rotating the multi-faceted control-object 1015 in the real world.

The abovementioned embodiments illustrate the main idea of this invention, namely using physical items (control objects) and actions (predefined rules) on these items in order to control the altered-reality space. The link between physical interactions and virtual content is considered important in the domain of altered-reality interaction paradigms and this invention provides an advantageous method and system to enable such interactions. Illustrated embodiments of the invention involve the registration of physical control objects or "tokens", which can act as placeholders on which virtual content can be positioned. The real-world interactions of the user with these control objects or tokens are interpreted as control signals that may invoke an action within the altered-reality application. Depending on the specific type of altered-reality application, predefining specific rules allows for intuitive interactions with the altered-reality application without the user having to interact with a computer interface or another separate out-of-band control system. Although the illustrated embodiments relate to altered-reality applications wherein the control objects are overlapped or registered with virtual content, it is clear to the skilled person that the principles of the invention are equally applicable to altered-reality applications wherein the manipulation of a control object by the user initiates virtual content or functionality which is not coupled to the control object. In other words, manipulating a control object in one corner of a room may activate some certain altered-reality functionality in another corner of the room.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. An altered-reality control method for controlling an altered-reality application, the altered-reality control method comprising the steps of:
- obtaining user sensor data pertaining to a scene of an environment wherein a user of the altered-reality application is located, the scene corresponding to a user-perceived part of the environment;
- determining a scene state based on the obtained user sensor data, the scene state comprising at least one of a location and an orientation of at least one predefined control object located within the scene;
- determining a target application state based on the determined scene state;
- comparing the determined target application state with a current application state; and
- determining at least one control command to transform the current application state into the determined target application state if said determined target application state is different from the current application state.

2. The altered-reality control method according to claim 1, further comprising
- obtaining external sensor data pertaining to at least a part of the environment wherein the user of the altered-reality application is located; and wherein
- determining the scene state comprises determining the scene state based on the external sensor data.

3. The altered-reality control method according to claim 1 or 2, further comprising
- obtaining object sensor data pertaining to at least one of location and orientation of the at least one control object; and wherein
- determining the scene state comprises determining the scene state based on the object sensor data.

4. The altered-reality control method according to any one of preceding claims, wherein the steps of obtaining respective sensor data from among the user sensor data, external sensor data and object sensor data, and determining the scene state are executed iteratively, and wherein determining the scene state comprises updating a previously determined scene state.

5. The altered-reality control method according to any one of the preceding claims, wherein determining the scene state comprises transforming the respective sensor data from among the user sensor data, external sensor data and object sensor data into a uniform format and combining the respective transformed sensor data.

6. The altered-reality control method according to claims 4 and 5, wherein transforming the respective sensor data into a uniform format is based on information pertaining to at least one previously determined scene state.

7. The altered-reality control method according to any one of the preceding claims, wherein determining the target application state based on the determined scene state comprises applying to the determined scene state a set of predefined interaction rules relating to the scene and the at least one control object.

8. An altered-reality control system for controlling an altered-reality application, the altered-reality control system comprising:
- at least on user sensor data obtaining unit configured for obtaining user sensor data pertaining to a scene of an environment wherein a user of the altered-reality application is located, the scene corresponding to a user-perceived part of the environment;
- a scene state determining unit configured for determining a scene state based on the obtained user sensor data, the scene state comprising at least one of a location and an orientation of at least one predefined control object located within the scene;
- a target application state determining unit configured for determining a target application state based on the determined scene state;
- a state comparing unit configured for comparing the determined target application state with a current application state; and
- a control command determining unit configured for determining at least one control command to transform the current application state into the determined target application state if said determined target application state is different from the current application state.

9. The altered-reality control system according to claim 8, further comprising
- at least one external sensor data obtaining unit configured for obtaining external sensor data pertaining to at least a part of the environment wherein the user of the altered-reality application is located; and wherein
- the scene state determining unit is further configured for determining the scene state based on the external sensor data.

10. The altered-reality control system according to claim 8 or 9, further comprising
- at least one object sensor data obtaining unit configured for obtaining object sensor data pertaining to at least one of location and orientation of the at least one control object; and wherein
- the scene state determining unit is further configured for determining the scene state based on the object sensor data.

11. The altered-reality control system according to any one of the preceding claims 8 to 10, further comprising
- an iteration unit configured to cooperate with the respective at least one sensor data obtaining unit from among the at least one user sensor data obtaining unit, at least one external sensor obtaining unit and at least one object sensor data obtaining unit and the scene state determining unit such that the steps of obtaining the respective sensor data from among the user sensor data, external sensor data and object sensor data, and determining the scene state, respectively, are executed iteratively; and wherein
- the scene state determining unit is configured for updating a previously determined scene state.

12. The altered-reality control system according to any one of the claims 8 to 11, wherein the scene state determining unit is further configured for transforming the respective sensor data from among the user sensor data, external sensor data and object sensor data into a uniform format and combining the respective transformed sensor data.

13. The altered-reality control system according to claims 11 and 12, wherein the scene state determining unit is configured for transforming the respective sensor data from among the user sensor data, external sensor data and object sensor data into a uniform format based on information pertaining to at least one previously determined scene state.

14. A device for controlling an altered-reality application, the device comprising a housing and electric circuitry and the device being configured for performing the method of any one of the claims 1 to 7.

15. A computer program product comprising computer-executable instructions for performing the method of any one of the claims 1 to 7, when the program is run on a computer.
